# EUROPÄISCHE PATENTSCHRIFT

(11) **EP 1 422 454 B1**
(45) Veröffentlichungstag und Bekanntmachung des Hinweises auf die Patenterteilung: **24.08.2005**
(21) Anmeldenummer: 03023321.7
(22) Anmeldetag: 15.10.2003
(51) Int. Cl.: F16K 31/08

(54) **Einrichtung zur Handhilfsbetätigung eines Ventils**
Hand assisted device for a valve
Dispositif d'assistance à main d'un soupape

(30) Priorität: 21.11.2002 DE 10254177
(43) Veröffentlichungstag der Anmeldung: 26.05.2004
(73) Patentinhaber: FESTO AG & Co, 73734 Esslingen (DE)
(72) Erfinder: Hesser, Robert, 73240 Wendlingen (DE); Walter, Bernhard, 88048 Ailingen (DE)
(74) Vertreter: Abel, Martin

(56) Entgegenhaltungen:
- DE-A- 1 908 689
- DE-C- 3 941 643
- DE-U- 7 143 862
- US-B1- 6 450 198

## Beschreibung

Die Erfindung betrifft eine Einrichtung zur Handhilfsbetätigung an einem bistabilen Mehrwegeventil.

Eine Einrichtung zur Handhilfsbetätigung mit dem ein Oberbegriff von Anspruch 1 definierten Merkmalen ist aus der US-B-6 450 199 bekannt.

Einrichtungen zur Handhilfsbetätigung für Wegeventile sind bekannt. Sind Ventile mit einer Einrichtung zur Handhilfsbetätigung ausgestattet, dann kann ihr Ventilglied unabhängig von der eigentlichen, zur Betätigung des Ventils vorgesehenen Betätigungseinrichtung von Fall zu Fall manuell geschaltet werden. Dies ist beispielsweise dann von Vorteil, wenn das jeweilige Ventil in eine seinen Schaltzyklus vorgebende Steuerung eingebunden ist und ein zu Testzwecken oder wegen eines außerordentlichen Vorkommnisses notwendiger Schaltvorgang auszulösen ist. Daneben kann eine Einrichtung zur Handhilfsbetätigung auch beim Ausfall der eigentlichen Betätigungseinrichtung bzw. deren Betätigungsmedium als Notinstrument verwendet werden.

Derartige Handhilfsbetätigungen sind in Verbindung mit monostabilen Mehrwegeventilen beispielsweise aus der DE 39 41 643 C1 und aus der DE 196 09 987 C2 bekannt. Weist ein Ventilglied zwei stabile Endstellungen auf (bistabile Ausführung), so ist es wünschenswert, mit der Handhilfsbetätigung das Ventilglied in die jeweils andere stabile Endstellung bringen zu können. Dabei ist es wichtig, definierte Betätigungs- und Schaltstellungen zu erhalten.

Der vorliegenden Erfindung liegt die Aufgabe zu Grunde, eine zuverlässig arbeitende Handhilfsbetätigung für ein bistabiles Mehrwegeventil zur Verfügung zu stellen, die eine Fehlbedienung weitgehend vermeidet.

Diese Aufgabe der Erfindung wird gelöst durch eine Einrichtung zur Handhilfsbetätigung an einem bistabilen Mehrwegeventil, mit einem zum Umschalten zwischen zwei Schaltstellungen unter Ausführung einer Schaltbewegung hin und her bewegbaren Ventilglied und mit einem in quer zur Richtung der Schaltbewegung verlaufenden Betätigungsrichtungen hin und her bewegbaren Betätigungsmittel, das wenigstens zwei parallel zueinander angeordnete Stößel aufweist, die bei einer Betätigung auf jeweils unterschiedliche Flanken des Ventilgliedes wirken, wobei bei Betätigung eines Stößels der jeweils andere Stößel verriegelt wird.

Die erfindungsgemäße Einrichtung zur Handhilfsbetätigung an einem bistabilen Mehrwegeventil weist ein Betätigungsmittel auf, das wenigstens zwei parallel zueinander angeordnete Stößel umfasst. Die beiden Stößel können in quer zur Richtung der Schaltbewegung des Ventilglieds verlaufenden Betätigungsrichtungen bewegt werden und wirken dabei auf jeweils unterschiedliche Flanken des Ventilgliedes. Bei Betätigung eines der beiden Stößel wird gleichzeitig der jeweils andere Stößel verriegelt. Auf diese Weise kann zuverlässig eine Fehlbedienung verhindert werden, auch wenn die beiden Stößel nah beieinander eingebaut sind. Die kleine Bauform der Handhilfsbetätigung ist aus Gründen der Kompaktheit des Ventils wünschenswert, zieht jedoch bei einer fehlenden Verriegelungsmöglichkeit die Gefahr einer Fehlbedienung nach sich. Solche Fehlbedienungen werden mit der erfindungsgemäßen Einrichtung dadurch vermieden, dass ein gedrückter Stößel nicht nur auf das Ventil einwirkt, sondern gleichzeitig den anderen Stößel blockiert. Auch das versehentliche gleichzeitige Drücken beider Stößel wird verhindert, da sich in diesem Fall beide Stößel gegenseitig blockieren und daher nicht gedrückt werden können.

Vorteilhafte Weiterbildungen der Erfindung gehen aus den Unteransprüchen hervor.

Die beiden Stößel wirken vorzugsweise jeweils in entgegengesetzter Schaltrichtung auf das Ventilglied, so dass durch Drücken jeweils eines Stößels das Ventilglied in eine der beiden stabilen Endlagen geschoben wird. Das Ventilglied kann beispielsweise eine elektromagnetische Ansteuerung aufweisen und ist vorzugsweise ein Ventilglied eines Vorsteuerventils, das einen Steuerdruck für ein Hauptventil schaltet. Die bistabilen Endlagen des Vorsteuerventils können beispielsweise durch Zusammenwirken eines Permanentmagneten mit einer Rückstellfeder erreicht werden. Eine der beiden Schaltstellungen wird durch die Rückstellfeder definiert. Die andere Schaltstellung kann durch die anziehende Wirkung eines Magneten definiert werden. Sobald das Ventilglied mit dem darin angeordneten Magneten mittels der elektromagnetischen Ansteuerung in einen gewissen Abstand zur magnetischen Gegenfläche gebracht ist, werden die Magnetkräfte zu schwach, so dass die Federkräfte der Rückstellfeder überwiegen.

Bei gedrücktem ersten Stößel verriegelt ein flexibler Verriegelungsarm den zweiten Stößel in seiner Ausgangsstellung. Bei gedrücktem zweiten Stößel verriegelt entweder der gleiche flexible Verriegelungsarm oder ein weiterer verriegelungsarm den ersten Stößel in seiner Ausgangsstellung. Auf diese Weise wird eine Zwangsführung realisiert, die zuverlässig eine Fehlbedienung verhindert.

Der Verriegelungsarm weist gemäß einer Ausgestaltung der Erfindung eine obere Stirnfläche auf, die bei einem gedrückten Stößel mit einer in Betätigungsrichtung weisenden Verriegelungsfläche des jeweils anderen Stößels zusammenwirkt. Sind zwei Verriegelungsarme vorhanden, weisen beide einen symmetrischen Aufbau mit jeweils einer oberen Stirnfläche auf, die bei gedrücktem Stößel mit einer in Betätigungsrichtung weisenden Verriegelungsfläche des jeweils anderen Stößels zusammenwirkt. Die Stößel weisen vorzugsweise jeweils eine in Betätigungsrichtung weisende Schrägfläche auf, die mit der oberen Stirnfläche des Verriegelungsarms zusammen wirkt. Es wird somit eine zuverlässige mechanische Verriegelung erreicht, die keinerlei messbaren Verschleiß aufweist und nur wenige bewegte Teile umfasst. Die wesentlichen Funktionsteile arbeiten ohne Scharniere o. dgl., weshalb sie über lange Zeit zuverlässig funktionieren.

Der Verriegelungsarm ist beim Drücken eines der beiden Stößels mittels dessen Schrägfläche in Richtung des jeweils anderen Stößels verstellbar, wobei dessen Verriegelungsfläche über der oberen Stirnfläche des Verriegelungsarms aufliegt. Die Stößel weisen vorzugsweise jeweils eine geneigte untere Schrägfläche auf, die jeweils mit einer der beiden Flanken des Ventilgliedes zusammenwirken.

Die Stößel sind vorzugsweise jeweils durch Federkraft in ihrer Ausgangsstellung gehalten. Zum Zweck der Rückstellung der Stößel in ihre Ausgangsstellung ist vorzugsweise eine Rückstellfeder vorgesehen, die um die Verriegelungsarme angeordnet ist und auf die Verriegelungsfläche der beiden Stößel wirkt.

Die Verriegelungsarme können vorzugsweise zumindest teilweise aus flexiblem Kunststoff gefertigt sein, damit sie eine für ihre Funktion zweckmäßige Flexibilität aufweisen. Die Stößel selbst können wahlweise aus Kunststoff oder aus Metall gefertigt sein. Die Verriegelungsarme aus flexiblem Kunststoff gewährleisten eine über lange Zeitdauer konstante Funktion, da keinerlei Verschleiß auftritt.

Weitere Aspekte und Vorteile der Erfindung ergeben sich aus dem nachfolgend beschriebenen Ausführungsbeispiel.

Nachfolgend wird ein bevorzugtes Ausführungsbeispiel unter Bezugnahme auf die beiliegenden Zeichnungen näher erläutert. Dabei zeigt:
- Figur 1: einen Ausschnitt eines mit einer erfindungsgemäßen Handhilfsbetätigung ausgestatteten Mehrwegeventils, wobei die Handhilfsbetätigung im nicht betätigten Zustand gezeigt ist,
- Figur 2: die Anordnung aus Figur 1 in betätigtem Zustand der Handhilfsbetätigung, und
- Figuren 3 bis 6: jeweils perspektivische Prinzipdarstellungen des Betätigungsmittels der Handhilfsbetätigung in verschiedenen Schaltstellungen.

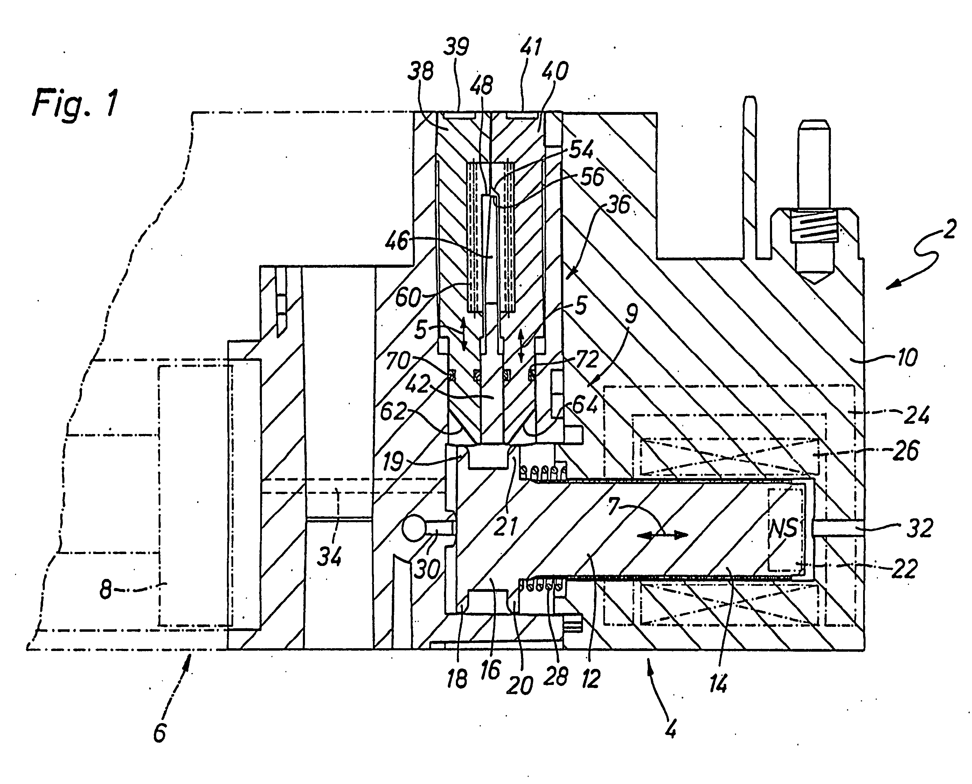

Figur 1 zeigt ein bistabiles Mehrwegeventil 2, das ein Vorsteuerventil 4 mit elektromagnetischer Betätigung und ein Hauptventil 6 umfasst. Vom mittels Magnetkraft im Rahmen einer Schaltbewegung 7 in zwei Schaltstellungen bringbaren Vorsteuerventil 4 mit einem beispielhaft zylindrischen Ventilglied 12 wird ein Steuerdruck für das Hauptventil 6 geschaltet. Zu diesem Zweck wird ein Druckanschluss 30 entweder verschlossen oder mit einem Arbeitsanschluss 34, der zum Hauptventil 6 führt, verbunden. Außerdem wird der Arbeitsanschluss 34 bei verschlossenem Druckanschluss 30 mit einem Entlüftungsanschluss 32 verbunden. Bei dem Vorsteuerventil 4 handelt es sich somit in herkömmlicher Bezeichnungsart um ein 3/2-Wege-Ventil.

Das Ventilglied 12 wird durch eine erste Rückstellfeder 28 in einer linken Schaltstellung gehalten und kann durch die Magnetkraft einer Spule 26 in die rechte Schaltstellung gezogen werden. Dort wird sie durch die Anziehungskraft eines im Ventilglied 12 angeordneten Permanentmagneten 22, der auf die entsprechende Fläche im Ventilgehäuse 10 wirkt, stabil gehalten und zwar gegen die Rückstellkraft der ersten Rückstellfeder 28. Durch Magnetkraft kann das Ventilglied 12 wieder in die linke Schaltstellung zurückgeschaltet werden. Sobald die Anziehungskraft des Magneten 22 auf eine entsprechende magnetische Gegenfläche um den Entlüftungsanschluss 32 zu schwach wird, überwiegt die Rückstellkraft der Feder 28, so dass das Ventilglied 12 in die rechte Endstellung gedrückt wird.

Beispielsweise an der in der Zeichnung linken Seite weist das Ventilglied 12 einen Steuerabschnitt 16 auf. Mit dem Steuerabschnitt 16 wird eine Verbindung zwischen Druckanschluss 30 und Arbeitsanschluss 34 gesteuert. Wenn das Ventilglied 12 von der linken Anlagefläche abgehoben ist, ist die Druckverbindung zwischen den Anschlüssen 30 und 34 geöffnet, wodurch der Ventilschieber 8 des Hauptventils 6 mit Druck beaufschlagt wird.

Das Ventilglied 12 verfügt über einen in der Zeichnung rechts vom Steuerabschnitt 16 liegenden Ankerabschnitt 14, der mit der Spule 26 zusammenwirkt, die innerhalb eines Jochs 24 im Ventilgehäuse 10 angeordnet ist. Spule 26, Joch 24 und Permanentmagnet 22 sind lediglich durch strichpunktierte Linien angedeutet.

Der Steuerabschnitt 16 umfasst seitlich einen ersten und zweiten Vorsprung 18 und 20, die eine erste Flanke 19 bzw. eine zweite Flanke 21 aufweisen. Die Vorsprünge sind insbesondere ringförmig ausgebildet und konzentrisch am Ventilglied 12 angeordnet. Auf die beiden Flanken 19 und 21 kann ein Betätigungsmittel 36 einwirken, das im Wesentlichen aus zwei federbelasteten Stößeln 38 und 40 besteht. Die Stößel 38 und 40 sind in senkrechter Richtung zur Richtung der Schaltbewegung 7 des Ventilglieds 12 in durch Doppelpfeil angedeuteten Betätigungsrichtungen 5 hin und her bewegbar und wirken mit dem Ventilglied 12 zugewandten unteren Schrägflächen 62 und 64 auf jeweils eine der beiden Flanken 19 bzw. 21.

Durch Drücken jeweils eines der beiden Stößels 38, 40 wird somit das Ventilglied 12 in linke oder rechte Richtung verschoben. Die beiden Stößel stellen somit wesentliche Komponenten einer verkürzt als Handhilfsbetätigung bezeichneten Einrichtung zur Handhilfsbetätigung 9 für das Mehrwegeventil 2 dar.

Zur Abdichtung des Vorsteuerraums um den Steuerabschnitt 16 gegen außen weisen die Stößel 38, 40 an dem Ventilglied 12 zugewandten unteren zylindrischen Abschnitten jeweils eine Ringnut 72 mit darin eingelegter Ringdichtung 70 auf. Die Ringdichtung 70 ist typischerweise ein sogenannter O-Ring.

Eine zweite Rückstellfeder 60 sorgt dafür, dass die Stößel 38, 40 im nicht gedrückten Zustand nicht auf das Ventilglied 12 einwirken, sondern von den Flanken 19, 21 abgehoben sind. Ein anhand der folgenden Figuren näher erläutertes Verriegelungselement 42 umfasst zwei Verriegelungsarme 44 und 46, deren im Folgenden als obere Stirnflächen 56 bzw. 58 bezeichnete vordere Stirnfläche jeweils mit zugewandten, vorliegend nach unten weisenden Verriegelungsflächen 48 bzw. 50 der Stößel 38, 40 zusammenwirken können und die Stößel 38, 40 wechselseitig verriegeln.

Zur manuellen Betätigung weisen die Stößel 38, 40 jeweils nach außen geführte und vorzugsweise bündig mit dem umgebenden Ventilgehäuse 10 abschließende Betätigungsflächen 39 bzw. 41 auf. Diese sind zur manuellen Bedienung, bei sehr kleiner Ventilbauweise ggf. mit Unterstützung eines spitzen Gegenstandes, vorgesehen.

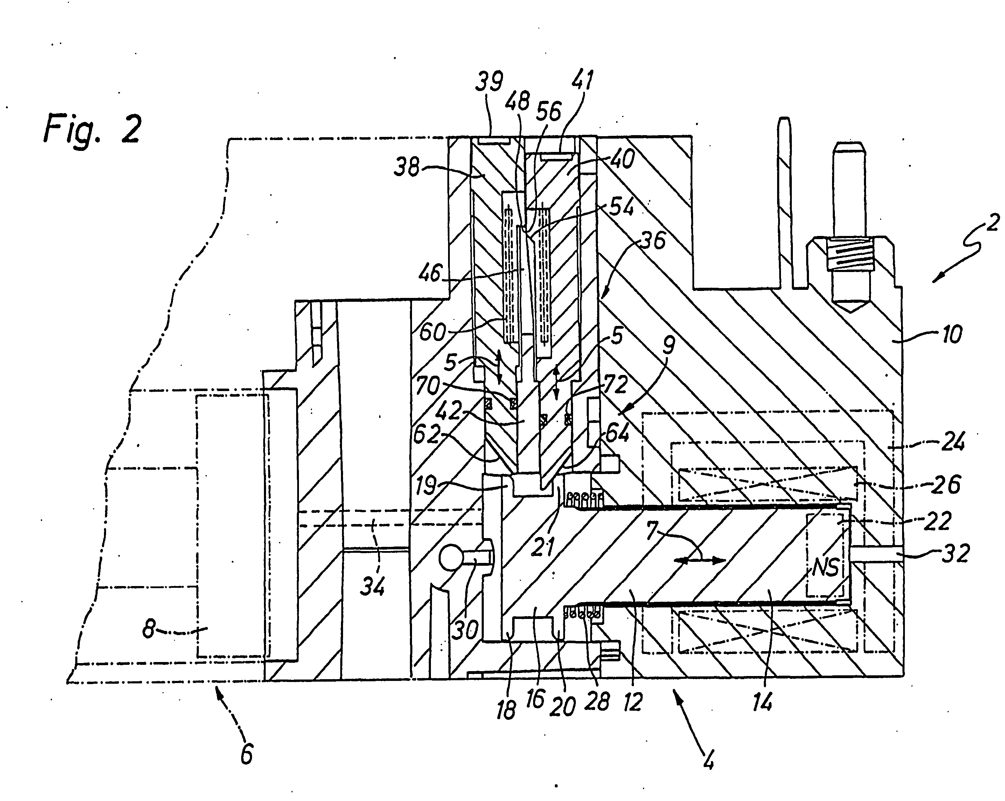

Figur 2 zeigt das Mehrwegeventil 2 entsprechend Figur 1 mit gedrücktem Betätigungsmittel 36. Exemplarisch ist hierbei der rechte zweite Stößel 40 nach unten gedrückt und wirkt mit seiner zweiten unteren Schrägfläche 64 auf die zweite Flanke 21 des zweiten Stegs 20 des Ventilgliedes 12. Auf diese Weise ist das Ventilglied 12 nach rechts verschoben worden, wodurch der Druckanschluss 30 mit dem Arbeitsanschluss 34 für das Hauptventil 6 verbunden ist, so dass dieses mit dem Arbeitsdruck beaufschlagt wird.

Durch Drücken des zweiten Stößels 40 wird ein zweiter Verriegelungsarm 46 in Richtung des ersten Stößels 38 verschwenkt und verriegelt diesen. Zu diesem Zweck ist an einer Innenseite des Stößels eine zweite Schrägfläche 54 vorgesehen, die mit einer Stirnfläche 58 des biegeflexiblen zweiten Verriegelungsarms 46 zusammenwirkt und diesen unter eine erste Verriegelungsfläche 48 des ersten Stößels 38 schiebt. In gleicher Weise kann auch der völlig symmetrisch aufgebaute erste Stößel 38 betätigt werden, wobei dann der zweite Stößel 40 durch einen entsprechenden ersten Verriegelungsarm 44 verriegelt wird.

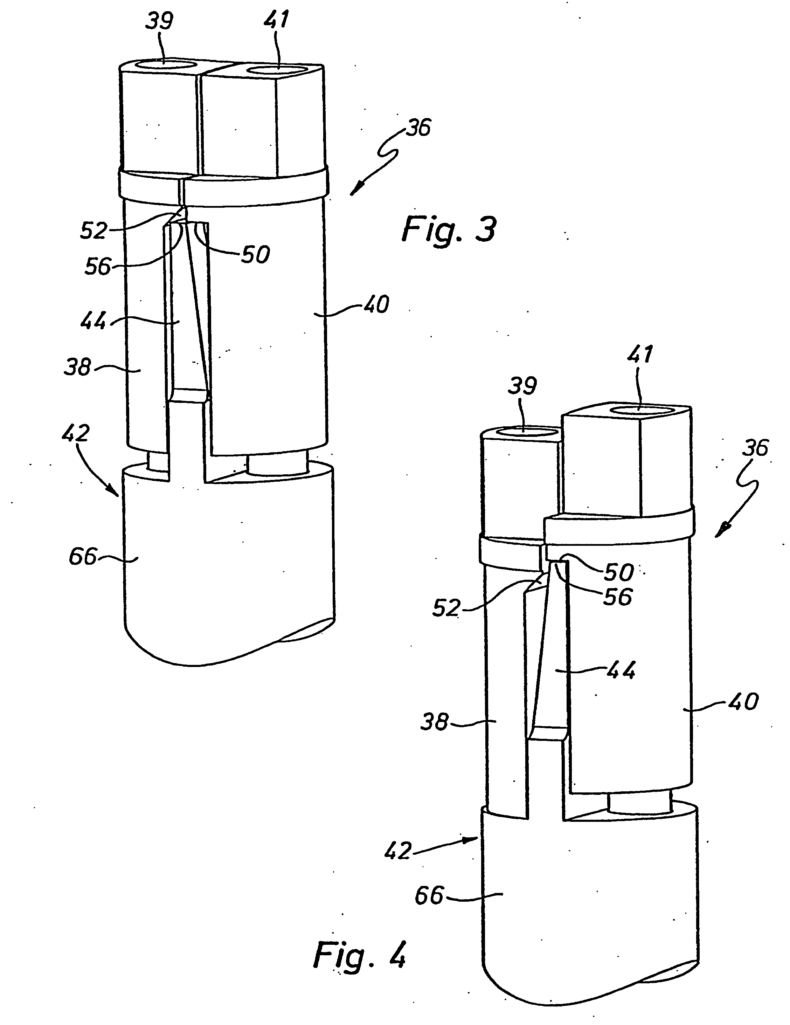

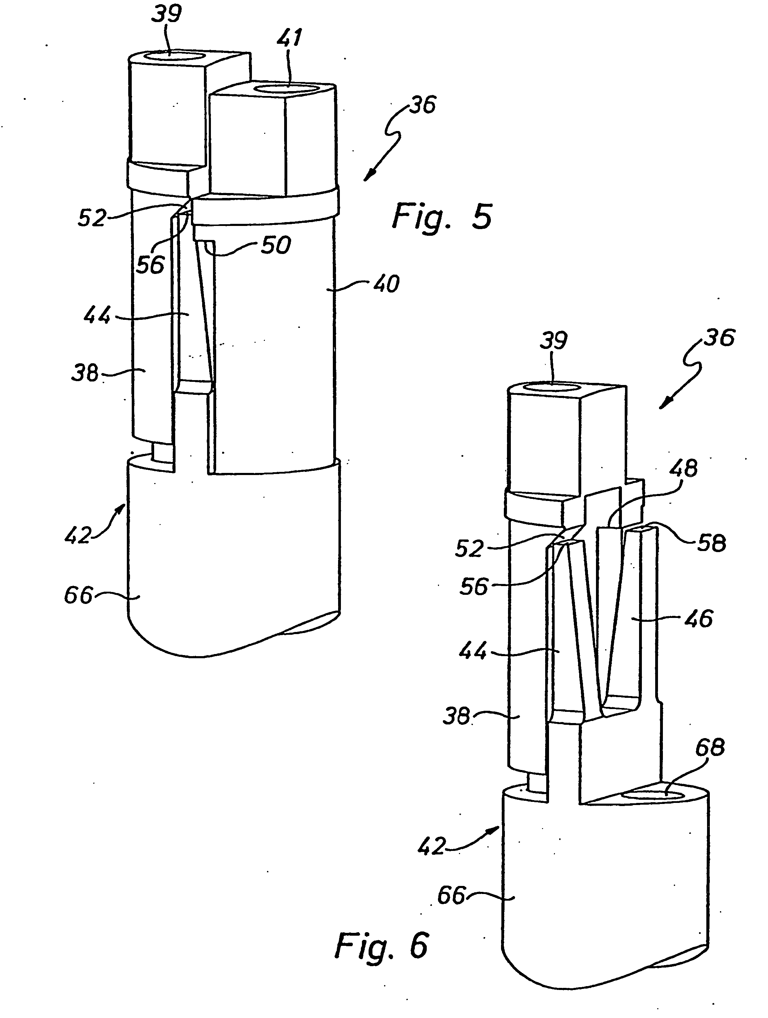

Figur 3 zeigt eine schematische Perspektivdarstellung des Betätigungsmittels 36 mit dem Verriegelungselement 42, mit den zwischen den Stößeln 38, 40 angeordneten und nach oben weisenden Verriegelungsarmen 44, 46, sowie die beiden Stößel 38, 40, die mit den Verriegelungsarmen 44, 46 zusammenwirken. Das Verriegelungselement 42 ist in einem unteren Bereich als Zylinderabschnitt 66 ausgestaltet und ist mit zwei Bohrungen 68 zur Durchführung von unteren zylindrischen Abschnitten der Stößel 38 und 40 ausgestattet (vgl. auch Figur 6). Die unteren zylindrischen Abschnitte der Stößel 38, 40 sind hierbei jeweils mit Dichtungsringen 70 zur Abdichtung ausgestattet (vgl. Figuren 1 und 2).

In der Darstellung der Figur 3 ist keiner der beiden Stößel 38, 40 gedrückt, so dass auch die Verriegelungsarme 44, 46 jeweils nicht verformt sind. Jeder der beiden Stößel kann nun wahlweise gedrückt werden.

Figur 4 zeigt den linken ersten Stößel 38 in nach unten gedrückter Stellung, so dass der entsprechende erste Verriegelungsarm 44 unter den zweiten Stößel 40 bewegt ist. Die flexible Verformung des ersten Verriegelungsarms 44 erfolgt durch das Gleiten dessen oberer Kante an der nach unten weisenden ersten Schrägfläche 52 des ersten Stößels 38. Der erste Verriegelungsarm 44 gleitet mit seiner nach oben weisenden ersten Stirnfläche 56 entlang dieser ersten Schrägfläche 52, bis er sich unter der zweiten Verriegelungsfläche 50 des zweiten Stößels 40 befindet. Der zweite Stößel 40 ist somit verriegelt.

Figur 5 zeigt den rechten zweiten Stößel 40 in nach unten gedrückter Stellung, wobei der erste Stößel 38 sich in verriegelter Stellung befindet. Ein hier nicht dargestellter zweiter Verriegelungsarm 46 ist hierbei unter die erste Verriegelungsfläche 48 des ersten Stößels 38 verschwenkt. Der erste Verriegelungsarm 44 befindet sich in entspannter Position unterhalb der ersten Schrägfläche 52 des ersten Stößels 38 und sorgt auf diese Weise für eine zusätzliche Blockade des nicht gedrückten ersten Stößels 38, da dieser den ersten Verriegelungsarm 44 nicht wegdrücken kann. Dem ersten Verriegelungsarm 44 wäre in einem solchen Fall der bereits gedrückte zweite Stößel 40 im Weg.

Figur 6 zeigt eine perspektivische Ansicht des Verriegelungselements 42 und des ersten Stößels 38 bei fehlendem zweiten Stößel 40. Hierbei ist besonders gut eine von den beiden Verriegelungsarmen 44, 46 bevorzugt gebildete gabelartige Anordnung verdeutlicht.

Das Verriegelungselement 42 kann in vorteilhafter Weise in einem Stück aus einem zumindest teilweise flexiblen Kunststoff gefertigt sein, wodurch die zur Ermöglichung des Verschwenkens gewünschte Elastizität der Verriegelungsarme realisiert werden kann. Die Stößel selbst können wahlweise ebenfalls aus Kunststoff oder auch aus einem geeigneten Metall wie beispielsweise Aluminium gefertigt sein.

## Patentansprüche

1. Einrichtung zur Handhilfsbetätigung an einem bistabilen Mehrwegeventil (2), mit einem zum Umschalten zwischen zwei Schaltstellungen unter Ausführung einer Schaltbewegung hin und her bewegbaren Ventilglied (12) und mit einem in quer zur Richtung der Schaltbewegung verlaufenden Betätigungsrichtungen hin und her bewegbaren Betätigungsmittel (36), **dadurch gekennzeichnet daß** das Betätigungsmittel wenigstens zwei parallel zueinander angeordnete Stößel (38, 40) aufweist, die bei einer manuellen Betätigung auf jeweils unterschiedliche Flanken (19, 21) des Ventilgliedes (12) wirken, wobei bei Betätigung eines Stößels (38, 40) der jeweils andere Stößel (40, 38) verriegelt wird.

2. Einrichtung nach Anspruch 1, **dadurch gekennzeichnet, dass** die Stößel (38, 40) jeweils in einander entgegengesetzten Schaltrichtungen auf das Ventilglied (12) wirken.

3. Einrichtung nach Anspruch 1 oder 2, **dadurch gekennzeichnet, dass** bei gedrücktem Stößel (38 bzw. 40) ein Verriegelungselement (42) den anderen Stößel (40 bzw. 38) in seiner Ausgangsstellung verriegelt und umgekehrt.

4. Einrichtung nach einem der Ansprüche 1 bis 3, **dadurch gekennzeichnet, dass** bei gedrücktem ersten Stößel (38) ein verschwenkbarer Verriegelungsarm (44, 46) den zweiten Stößel (40) in seiner Ausgangsstellung verriegelt und umgekehrt.

5. Einrichtung nach Anspruch 4, **dadurch gekennzeichnet, dass** der betreffende Verriegelungsarm (44, 46) zum Ermöglichen der Schwenkbewegung elastisch biegbar ist.

6. Einrichtung nach Anspruch 4 oder 5, **dadurch gekennzeichnet, dass** der Verriegelungsarm (44, 46) eine vordere Stirnfläche (56, 58) aufweist, die bei einem gedrückten Stößel (38, 40) mit einer in Betätigungsrichtung weisenden Verriegelungsfläche (48, 50) des jeweils anderen Stößels (38, 40) zusammen wirkt.

7. Einrichtung nach einem der Ansprüche 4 bis 6, **dadurch gekennzeichnet, dass** die Stößel (38, 40) jeweils eine in Betätigungsrichtung weisende Schrägfläche (52, 54) aufweisen, die mit der vorderen Stirnfläche (56, 58) des Verriegelungsarms (44, 46) zusammenwirken kann.

8. Einrichtung nach Anspruch 7, **dadurch gekennzeichnet, dass** der Verriegelungsarm (44, 46) beim Drücken eines der beiden Stößel (38, 40) mittels dessen Schrägfläche (52, 54) in Richtung des jeweils anderen Stößels (38, 40) bewegbar ist, wobei dessen Verriegelungsfläche (48, 50) vor der vorderen Stirnfläche (56, 58) des Verriegelungsarms (44, 46) liegt.

9. Einrichtung nach einem der Ansprüche 3 bis 8, **dadurch gekennzeichnet, dass** das Verriegelungselement (42) zwei Verriegelungsarme (44, 46) aufweist.

10. Einrichtung nach Anspruch 9, **dadurch gekennzeichnet, dass** einer der Verriegelungsarme (44, 46) beim Drücken eines der beiden Stößel (38, 40) mittels dessen Schrägfläche (52, 54) in Richtung des jeweils anderen Stößels (38, 40) bewegbar ist, wobei dessen Verriegelungsfläche (48, 50) vor der vorderen Stirnfläche (56, 58) des Verriegelungsarms (44, 46) liegt.

11. Einrichtung nach einem der voranstehenden Ansprüche, **dadurch gekennzeichnet, dass** die Stößel (38, 40) jeweils eine dem Ventilglied zugewandte geneigte untere Schrägfläche (62, 64) aufweisen, die jeweils mit einer Flanke (19, 21) des Ventilgliedes (12) zusammenwirken kann.

12. Einrichtung nach einem der voranstehenden Ansprüche, **dadurch gekennzeichnet, dass** die Stößel (38, 40) jeweils durch Federkraft in ihrer Ausgangsstellung gehalten sind, insbesondere durch mindestens eine Rückstellfeder (60).

13. Einrichtung nach Anspruch 12, **dadurch gekennzeichnet, dass** den beiden Stößeln (38, 40) eine gemeinsame Rückstellfeder (60) zugeordnet ist.

14. Einrichtung nach Anspruch 12 oder 13, **dadurch gekennzeichnet, dass** mindestens eine Rückstellfeder (60) auf die Verriegelungsfläche (48, 50) wirkt.

15. Einrichtung nach einem der Ansprüche 12 bis 14, **dadurch gekennzeichnet, dass** die Rückstellfeder (60) um den bzw. um die zwischen den beiden Stößeln (38, 40) angeordneten Verriegelungsarme (44, 46) angeordnet ist.

16. Einrichtung nach einem der Ansprüche 4 bis 15, **dadurch gekennzeichnet, dass** mindestens ein Verriegelungsarm 44, 46) aus zumindest teilweise flexiblem Kunststoffmaterial gefertigt ist.

## Claims

1. Device for manual auxiliary control on a bistable multiway valve (2), with a reciprocating valve member (12) for switching between two switching positions in the course of a switching movement, and with control means (36) capable of reciprocation in actuating directions extending at right angles to the direction of the switching movement, **characterised in that** the control means comprise at least two plungers (38, 40) arranged parallel to one another, which on manual actuation act on different flanks (19, 21) of the valve member (12), one plunger (40, 38) being locked while the other plunger (38, 40) is being operated.

2. Device according to claim 1, **characterised in that** the plungers (38, 40) act on the valve member (12) in opposite switching directions.

3. Device according to claim 1 or 2, **characterised in that**, when one plunger (38 or 40) is depressed, a locking element (42) locks the other plunger (40 or 38) in its starting position and vice versa.

4. Device according to any of claims 1 to 3, **characterised in that**, when the first plunger (38) is depressed, a pivotable locking arm (44, 46) locks the second plunger (40) in its starting position and vice versa.

5. Device according to claim 4, **characterised in that** the locking arm (44, 46) in question is resiliently bendable to allow for the pivoting movement.

6. Device according to claim 4 or 5, **characterised in that** the locking arm (44, 46) has a front end face (56, 58) which, when one plunger (38, 40) is depressed, acts together with a locking surface (48, 50) of the other plunger (38, 40), which faces the actuating direction.

7. Device according to any of claims 4 to 6, **characterised in that** each of the plungers (38, 40) has an inclined surface (52, 54) facing the actuating direction, which is capable of acting together with the front end face (56, 58) of the locking arm (44, 46).

8. Device according to claim 7, **characterised in that** the locking arm (44, 46) can, when one of the two plungers (38, 40) is depressed, be displaced towards the other plunger (38, 40) by means of the inclined plunger surface (52, 54), the plunger locking surface (48, 50) lying in front of the front end face (56, 58) of the locking arm (44, 46).

9. Device according to any of claims 3 to 8, **characterised in that** the locking element (42) comprises two locking arms (44, 46).

10. Device according to claim 9, **characterised in that** either of the locking arms (44, 46) can, when one of the two plungers (38, 40) is depressed, be displaced towards the other plunger (38, 40) by means of the inclined plunger surface (52, 54), the plunger locking surface (48, 50) lying in front of the front end face (56, 58) of the locking arm (44, 46).

11. Device according to any of the preceding claims, **characterised in that** each of the plungers (38, 40) has a lower inclined surface (62, 64) facing the valve member and capable of acting together with a flank (19, 21) of the valve member (12).

12. Device according to any of the preceding claims, **characterised in that** the plungers (38, 40) are held in their starting positions by spring force, in particular by the force of at least one return spring (60).

13. Device according to claim 12, **characterised in that** a common return spring (60) is assigned to the two plungers (38, 40).

14. Device according to claim 12 or 13, **characterised in that** at least one return spring (60) acts on the locking surface (48, 50).

15. Device according to any of claims 12 to 14, **characterised in that** the return spring (60) is arranged around the locking arm(s) (44, 46) located between the two plungers (38, 40).

16. Device according to any of claims 4 to 15, **characterised in that** at least one locking arm (44, 46) is at least partially made of a flexible plastic material.

## Revendications

1. Dispositif d'actionnement auxiliaire manuel d'une soupape à plusieurs voies (2) bistable, comportant un organe de soupape (12) déplaçable en sens alternés pour la commutation entre deux positions de commutation, par l'exécution d'un mouvement de commutation, et comportant un moyen d'actionnement (36) déplaçable en sens alternés dans des directions d'actionnement s'étendant transversalement à la direction du mouvement de commutation, **caractérisé en ce que** le moyen d'actionnement comporte au moins deux poussoirs (38, 40) disposés parallèlement l'un à l'autre qui, lors d'un actionnement manuel, agissent sur deux flancs (19, 21) différents de l'organe de soupape, l'actionnement d'un poussoir (38, 40) étant verrouillé par l'autre poussoir (40, 38).

2. Dispositif selon la revendication 1, **caractérisé en ce que** les poussoirs (38, 40) agissent chacun sur l'organe de soupape (12) dans des sens de commutation opposés l'un à l'autre.

3. Dispositif selon la revendication 1 ou 2, **caractérisé en ce que** lorsque le poussoir (38 ou 40) est enfoncé, un élément de verrouillage (42) verrouille l'autre poussoir (40 ou 38) dans sa position initiale, et inversement.

4. Dispositif selon l'une des revendications 1 à 3, **caractérisé en ce que** lorsque le premier poussoir (38) est enfoncé, un bras de verrouillage (44, 46) pouvant pivoter verrouille le deuxième poussoir (40) dans sa position initiale, et inversement.

5. Dispositif selon la revendication 4, **caractérisé en ce que** le bras de verrouillage (44, 46) concerné est flexible élastiquement pour permettre le mouvement de pivotement.

6. Dispositif selon la revendication 4 ou 5, **caractérisé en ce que** le bras de verrouillage (44, 46) présente une surface frontale avant (56, 58) qui, lorsqu'un poussoir (38, 40) est enfoncé, coopère avec une surface de verrouillage (48, 50), dirigée dans le sens d'actionnement, de l'autre poussoir (38, 40).

7. Dispositif selon l'une des revendications 4 à 6, **caractérisé en ce que** les poussoirs (38, 40) présentent chacun une surface oblique (52, 54) dirigée dans le sens d'actionnement qui peut coopérer avec la surface frontale avant (56, 58) du bras de verrouillage (44, 46).

8. Dispositif selon la revendication 7, **caractérisé en ce que** lorsque l'on enfonce l'un des deux poussoirs (38, 40) au moyen de sa surface oblique (52, 53), le bras de verrouillage (44, 46) est déplaçable dans la direction de l'autre poussoir (38, 40), sa surface de verrouillage (48, 50) se situant devant la surface frontale avant (56, 58) du bras de verrouillage (44, 46).

9. Dispositif selon l'une des revendications 3 à 8, **caractérisé en ce que** l'élément de verrouillage (42) comporte deux bras de verrouillage (44, 46).

10. Dispositif selon la revendication 9, **caractérisé en ce que** lorsqu'on enfonce l'un des deux poussoirs (38, 40) au moyen de sa surface oblique (52, 54), l'un des bras de verrouillage (44, 46) est déplaçable en direction de l'autre poussoir (38, 40), sa surface de verrouillage (48, 50) se situant devant la surface frontale avant (56, 58) du bras de verrouillage (44, 46).

11. Dispositif selon l'une des revendications précédentes, **caractérisé en ce que** les poussoirs (38, 40) présentent chacun une surface oblique inférieure (62, 64) inclinée, tournée vers l'organe de soupape, les surfaces obliques coopérant chacune avec un flanc (19, 21) de l'organe de soupape (12).

12. Dispositif selon l'une des revendications précédentes, **caractérisé en ce que** les poussoirs (38, 40) sont maintenus chacun dans leur position initiale par la force d'un ressort, en particulier par au moins un ressort de rappel (60).

13. Dispositif selon la revendication 12, **caractérisé en ce qu'**un ressort de rappel (60) commun est associé aux deux poussoirs (38, 40).

14. Dispositif selon la revendication 12 ou 13, **caractérisé en ce qu'**au moins un ressort de rappel (60) agit sur la surface de verrouillage (48, 50).

15. Dispositif selon l'une des revendications 12 à 14, **caractérisé en ce que** le ressort de rappel (60) est disposé autour du ou des bras de verrouillage (44, 46) disposés entre les deux poussoirs (38, 40).

16. Dispositif selon l'une des revendications 4 à 15, **caractérisé en ce qu'**au moins un bras de verrouillage (44, 46) est fabriqué dans une matière plastique au moins partiellement flexible.
